## Europäisches Patentamt

## European Patent Office

## Office européen des brevets

(11) Veröffentlichungsnummer: **0 002 710**
A1

(12) **EUROPÄISCHE PATENTANMELDUNG**

(21) Anmeldenummer: 78101630.8

(22) Anmeldetag: 09.12.78

(51) Int. Cl.²: **C 07 D 407/06**
**// A01N9/28**

(30) Priorität: 24.12.77 DE 2757926

(43) Veröffentlichungstag der Anmeldung: 11.07.79
Patentblatt 79/14

(84) Benannte Vertragsstaaten: **BE DE FR GB**

(71) Anmelder: **Bayer Aktiengesellschaft, Zentralbereich Patente,Marken und Lizenzen Bayerwerk, D-5090 Leverkusen 1 (DE)**

(72) Erfinder: **Rauleder, Gebhard, Dr., Mozartstrasse 20, D-5657 Haan (DE)**
Erfinder: **Waldmann, Helmut, Dr., Carl-Rumpff-Strasse 59, D-5090 Leverkusen (DE)**
Erfinder: **Mues, Volker, Dr., Marées-Strasse 61, D-5600 Wuppertal 1 (DE)**
Erfinder: **Seifert, Hermann, Dr., Ruwergasse 4, D-5000 Köln 80 (DE)**

(54) **Verfahren zur Herstellung von 5-(Oxiranylmethyl)-1,3-benzodioxol.**

(57) Verfahren zur Herstellung von 5-(Oxiranylmethyl)-1,3-benzodioxol aus 5-(2-Propenyl)-1,3-benzodioxol und Percarbonsäuren, dadurch gekennzeichnet, daß man 5-(2-Propenyl)-benzodioxol mit einer Lösung einer 1 bis 8, bevorzugt 1 bis 5 Kohlenstoffatome enthaltenden Percarbonsäure in einem organischen Lösungsmittel, z. B. einem Kohlenwasserstoff, einem gegebenenfalls substituierten aromatischen Kohlenwasserstoff, einem sauerstoffhaltigen Kohlenwasserstoff, wie Äther oder Ester, oder einem chlorierten Kohlenwasserstoff, bei einem Molverhältnis von 5-(2-Propenyl)-1,3-benzodioxol zu Percarbonsäure von 1,2 bis 20:1 und einer Temperatur von −20 bis +80° C umsetzt.

ACTORUM AG

BAYER AKTIENGESELLSCHAFT     5090 Leverkusen, Bayerwerk

Zentralbereich               Dz-by
Patente, Marken und Lizenzen

Verfahren zur Herstellung von 5-(Oxiranylmethyl)-1,3-benzodioxol

Die vorliegende Erfindung betrifft ein Verfahren zur Herstellung von 5-(Oxiranylmethyl)-1,3-benzodioxol aus 5-(2-Propenyl)-1,3-benzodioxol und Percarbonsäuren.

5-(Oxiranylmethyl)-1,3-benzodioxol kann auf dem Gebiet des Pflanzenschutzes und als organisches Zwischenprodukt Verwendung finden.

Mosettig publizierte 1929 die Reaktion von Piperonal mit Diazomethan in einer Mischung von Äther und Methanol als Lösungsmittel bei $-15^{\circ}$C. Bei dieser Reaktion soll als Hauptprodukt 5-(Oxiranylmethyl)-1,3-benzodioxol entstehen. (E.Mosettig, Ber.d.Dtsch.Chem.Ges. 62, S. 1271 (1929) ).

Zur Identifizierung des Reaktionsproduktes wurde 5-(Oxiranylmethyl)-1,3-benzodioxol noch über einen anderen Syntheseweg hergestellt. Und zwar wurde 5-(2-Propenyl)-1,3-benzodioxol mit Jod und Quecksilber-(II)-oxid behandelt und anschließend diese Reaktionsmischung mit

Le A 18 612

- 2 -

gepulvertem Kaliumhydroxid geschüttelt. Zur technischen Herstellung von 5-(Oxiranylmethyl)-1,3-benzodioxol ist jedoch wegen der Giftigkeit und Gefährlichkeit der verwendeten Reaktionskomponenten keine der beiden Methoden geeignet.

Die Herstellung von 5-(Oxiranylmethyl)-1,3-benzodioxol aus dem Bromhydrin von 5-(2-Propenyl)-1,3-benzodioxol durch Behandeln mit einer Base, wie 1974 von Barnes (R.A.Barnes, Int.Congr.Essent. Oils, 6 th, 1974, S.132) beschrieben, ist für eine technische Herstellung ebenfalls ungeeignet, da Brom ein zu teures Ausgangsmaterial ist und bei der Umsetzung umweltfeindliche Salzabfälle anfallen.

Weiterhin hat man versucht, die Epoxidation von 5-(2-Propenyl)-1,3-benzodioxol nach der Methode von Payne (G.Payne, Tetrahedron 18, 763 (1962) ) mit Wasserstoffperoxid in Gegenwart von Benzonitril durchzuführen. Die erreichte Ausbeute an 5-(Oxiranylmethyl)-1,3-benzodioxol betrug jedoch nur 5 % (M.Antennis, F.Borremans, Von den Bossche und G.Verhegge, Org.Magn.Resonance, 1972, Vol. 4, S. 486).

Über den Versuch, die Prileschajew-Reaktion (N.Prileschajew, Ber. dtsch.chem. Ges. 42, 4811 (1909) ) zur Herstellung von 5-(Oxiranylmethyl)-1,3-benzodioxol anzuwenden, berichtete 1929 Böeseken und Elsen (J.Böeseken und G.Elsen, Rec.drav.chim. 48, 363-9 (1929) ). Sie setzten 5-(2-Propenyl)-1,3-benzodioxol mit Peressigsäure um. Obwohl sie die Um-

Le A 18 612

- 3 -

setzung bei tiefer Temperatur durchführten, erhielten sie als Reaktionsprodukt nur die aus der Aufspaltung des Oxiranringes im 5-(Oxiranylmethyl)-1,3-benzodioxol mit Essigsäure resultierenden Acetate.

Durch Verwendung von Perbenzoesäure konnte schließlich 5-(Oxiranylmethyl)-1,3-benzodioxol synthetisiert werden (M.Autennis, F.Borremans, Von den Bossche und G.Verhegge, Org.Magn.Resonance, 1972, Vol.4, S. 486). Zur Herstellung analytischer Mengen von 5-(Oxiranylmethyl)-1,3-benzodioxol wurde 5-(2-Propenyl)-1,3-benzodioxol mit Perbenzoesäure in Chloroform als Lösungsmittel bei $0^{o}$C 24 Stunden lang gerührt, die Reaktionslösung mit 10 % NaOH gewaschen und destilliert. 5-(Oxiranylmethyl)-1,3-benzodioxol wurde in 60 %iger Ausbeute erhalten. Die unbefriedigende Ausbeute, die lange Reaktionszeit und die Verwendung der teuren Perbenzoesäure macht jedoch diese Herstellungsmethode für eine techn. Anwendung unbrauchbar.

Nach der Veröffentlichung von I.Varagnat, Ind.Eng.Chem. Prod.Res.Dev. Vol. 15, No. 3, S.212-213, (1976) reagiert Percarbonsäure mit Phenol bzw. Brenzkatechin unter Kernhydroxylierung. Bei dem Versuch der Umsetzung von 5-(2-Propenyl)-1,3-benzodioxol nach Prileschajew ist somit - da es sich um ein Brenzkatechinderivat handelt - mit dieser Reaktion als Konkurrenzreaktion zur Epoxidation zu rechnen, was zu einer Ausbeuteminderung an 5-(Oxiranyl-methyl)-1,3-benzodioxol führt.

Demgegenüber wurde nun überraschenderweise gefunden, daß man 5-(Oxiranylmethyl)-1,3-benzodioxol in guten Ausbeuten und hoher Reinheit herstellen kann, wenn man 5-(2-Propenyl)-

Le A 18 612

- 4 -

1,3-benzodioxol mit einer Lösung einer 1 bis 8 Kohlenstoffatome enthaltenden Percarbonsäure in einem organischen Lösungsmittel bei einem Molverhältnis von 5-(2-Propenyl)-1,3-benzodioxol zu Percarbonsäure von 1,2 bis 20 : 1 und bei einer Temperatur von -20 bis +80$^{\circ}$C umsetzt.

Als organische Lösungsmittel können die verschiedensten Kohlenwasserstoffe verwendet werden wie Hexan, Heptan, Octan, 2-Äthyl-hexan, Decan, Dodecan, Cyclohexan, Methylcyclopentan, Petroläther und aromatische Kohlenwasserstoffe, die gegebenenfalls substituiert sein können, wie Benzol, Nitrobenzol, Toluol, Äthylbenzol, Cumol, Diisopropylbenzol, Xylol, Chlorbenzol und sauerstoffhaltige Kohlenwasserstoffe wie Diäthyläther, Diisopropyläther, Dibutyläther, Tetrahydrofuran, Dioxan, Aceton, Methyl-äthyl-keton, Essigsäureäthylester, Essigsäuremethylester, Essigsäurepropylester, Essigsäurebutylester, Propionsäuremethylester, Propionsäureäthylester, Propionsäurepropylester, Buttersäuremethylester, Buttersäureäthylester, Buttersäurepropylester, Buttersäurebutylester und chlorierte Kohlenwasserstoffe wie Methylenchlorid, Chloroform, Tetrachlorkohlenstoff, 1-Chloräthan, 1,2-Dichloräthan, 1,1-Dichloräthan, 1,1,2,2-Tetrachloräthan, 1-Chlorpropan, 2-Chlorpropan, 1,2-Dichlorpropan, 1,3-Dichlorpropan, 2,3-Dichlorpropan, 1,2,3-Trichlorpropan, 1,1,2,3-Tetrachlorpropan, Butylchlorid, 1,2-Dichlorbutan, 1,4-Dichlorbutan, 2,3-Dichlorbutan, 1,3-Dichlorbutan, 1,2,3,4-Tetrachlorbutan, tert.-Butylchlorid, Amylchlorid, 1,2-Dichlorpentan, 1,5-Dichlorpentan, 1,2,3,4-Tetrachlorpentan, Cyclopentylchlorid, 1,2-Dichlorcyclopentylchlorid, Hexylchlorid, 1,2-Dichlorhexan, 1,6-Dichlorhexan, 1,2,3,4-Tetrachlorhexan, 1,2,5,6-Tetrachlorhexan, Cyclohexylchlorid, 1,2-Dichlorhexan, Heptylchlorid, 1,2-Dichlorheptan, 1,2,3,4-Tetrachlorheptan, Cycloheptylchlorid, 1,2-Dichlorheptan, Octylchlorid, 1,2-Dichloroctan, 1,2,3,4-Tetrachloroctan, Cyclooctylchlorid, und 1,2-Dichloroctan.

Bevorzugte Lösungsmittel sind von den chlorierten Kohlen-wasserstoffen Methylenchlorid, Chloroform, Tetrachlor-kohlenstoff und 1,2-Dichlorpropan, von den aromatischen Kohlenwasserstoffen Benzol, Nitrobenzol, Toluol und Chlorbenzol, von den Kohlenwasserstoffen 2-Äthyl-hexan, Cyclohexan, Methyl-cyclopentan, von den sauerstoffhaltigen Kohlenwasserstoffen Aceton, Tetrahydofuran, Propionsäure-äthylester.

Besonders bevorzugte Lösungsmittel sind von den chlorierten Kohlenwasserstoffen 1,2-Dichlorpropan und Tetrachlorkohlenstoff, von den aromatischen Kohlenwasserstoffen Benzol und Chlorbenzol, von den Kohlenwasserstoffen Cyclohexan und von den sauerstoffhaltigen Kohlenwasserstoffen Propionsäure-äthylester.

Verwendet werden können auch Lösungsmittelgemische der verschiedenen oben angegebenen organischen Lösungsmittel.

Erfindungsgemäß verwendbare Persäuren mit bis zu 8 C-Atomen sind Perameisensäure, Peressigsäure, Perpropionsäure, Per-buttersäure, Perisobuttersäure, Pervaleriansäure, Monoper-phthalsäure, Monoperbernsteinsäure, Monopermaleinsäure, m-Chlorperbenzoesäure und Trifluorperessigsäure.
Bevorzugt sind geeignet Percarbonsäuren mit bis zu 5 Kohlen-stoffatomen wie Perameisensäure, Peressigsäure, Perpropion-säure, Perbuttersäure, Perisobuttersäure und Pervaleriansäure.

Le A 18 612

- 6 -

Besonders bevorzugt werden Perpropionsäure und Perisobuttersäure verwendet. Ganz besonders bevorzugt ist Perpropionsäure. Die Herstellung der mineralsäurefreien Persäuren in
einem der genannten organischen Lösungsmittel kann z.B. nach
dem in der DOS 2 262 970 beschriebenen Verfahren erfolgen.

Im allgemeinen arbeitet man bei der praktischen Durchführung des erfindungsgemäßen Verfahrens in einem Temperaturbereich von -20 - 80°C. Bevorzugt arbeitet man bei
0 - 60°C, besonders bevorzugt bei 30 - 50°C. In Sonderfällen können auch die angegebenen Temperaturen unter-
oder überschritten werden.

Neben der Arbeitsweise unter isothermen Bedingungen, d.h.
Einhaltung einer einheitlichen Temperatur im gesamten Reaktionsgemisch, kann man die Umsetzung auch unter Ausbildung eines sogenannten Temperaturgradienten durchführen, der im allgemeinen mit fortschreitender Reaktion
zunimmt. Man kann aber auch die Reaktion so führen, daß
sich mit dem Fortschreiten der Reaktion ein Gradient
fallender Temperatur ausbildet.

Das Molverhältnis von 5-(2-Propenyl)-1,3-benzodioxol zu
Percarbonsäure beträgt erfindungsgemäß 1,2 bis 20:1,0.
Angewendet werden kann auch ein Molverhältnis von 2,0
bis 15:1,0. Bevorzugt wird ein Molverhältnis von 3,0
bis 10:1,0 angewendet. Ganz besonders vorteilhaft ist es,
ein Molverhältnis von 4 bis 8 Mol 5-(2-Propenyl)-1,3-
benzodioxol je Mol Persäure anzuwenden.

Le A 19 612

- 7 -

Das erfindungsgemäße Verfahren kann bei den verschiedensten Drücken durchgeführt werden. Im allgemeinen arbeitet man bei Normaldruck; das Verfahren kann jedoch auch bei Unter- oder Überdruck durchgeführt werden.

Der Wassergehalt der zur Epoxidation verwendeten Percarbonsäure soll im allgemeinen möglichst niedrig sein. Geringe Wassermengen bis 5 Gew.-% sind im allgemeinen nicht störend. Geeignet ist beispielsweise eine Percarbonsäure mit einem Wassergehalt von bis zu 1 Gew.-%. Vorzugsweise verwendet man eine Percarbonsäurelösung, die weniger als 0,5 Gew.-% Wasser enthält. Besonders bevorzugt ist ein Wassergehalt von weniger als 0,1 Gew.-%.

Der Wasserstoffperoxidgehalt der angewendeten Percarbonsäure kann in weiten Grenzen schwanken, z.B. kann er 0,1 bis 10 Gew.-% betragen. Besonders geeignet ist beispielsweise eine Percarbonsäure mit einem Wasserstoffperoxidgehalt von weniger als 2 %. Es kann jedoch auch vorteilhaft sein, mit einer Percarbonsäure zu epoxidieren, deren Wasserstoffperoxidgehalt unterhalb 0,3 % liegt.

Der Mineralsäuregehalt der zur Umsetzung gelangenden Percarbonsäurelösung soll möglichst niedrig sein. Vorteilhaft ist es, die Reaktion mit einer Percarbonsäurelösung durchzuführen, die einen Mineralsäuregehalt unterhalb 50 ppm. besitzt. Besonders vorteilhaft ist ein Mineralsäuregehalt von weniger als 10 ppm.

Die Durchführung der Reaktion kann diskontinuierlich oder kontinuierlich in den für Umsetzungen dieser Art üblichen Vorrichtungen wie Rührwerkskessel, Siedereaktoren, Röhren-

Le A 18 612

reaktoren, Schlaufenreaktoren oder Schleifenreaktoren erfolgen.

Schwermetallionen im Reaktionsgemisch katalysieren die Zersetzung der Percarbonsäure. Man setzt deshalb der Percarbonsäure im allgemeinen Substanzen zu, die die Schwermetallionen durch Komplexbildung inaktivieren. Bekannte Substanzen solcher Art sind Gluconsäure, Äthylendiamintetraessigsäure, Natriumsilicat, Natriumpyrophosphat, Natriumhexametaphosphat, Dinatriumdimethylpyrophosphat oder $Na_2 (2$-äthylhexyl$)_5 (P_3O_{10})_2$ (DAS 1 056 596, Spalte 4, Zeile 60 ff.).

5-(2-Propenyl)-1,3-benzodioxol kann auf verschiedene Art in die für die Umsetzung verwendetete Vorrichtung eingebracht werden. Man kann es gemeinsam mit der Percarbonsäurelösung in den Reaktor geben oder man führt die beiden Komponenten getrennt voneinander dem Reaktor zu. Weiterhin ist es möglich, das Olefin und die Percarbonsäurelösung an verschiedenen Stellen in die Reaktoreinheit zu leiten. Bei Verwendung mehrerer in Kaskade geschalteter Reaktoren kann es zweckmäßig sein, das gesamte Olefin in den ersten Reaktor einzubringen. Man kann aber das Olefin auch auf die verschiedenen Reaktoren aufteilen.

Die Reaktionswärme wird durch innen- oder außenliegende Kühler abgeführt. Zur Ableitung der Reaktionswärme kann die Umsetzung auch unter Rückfluß, d.h. in Siedereaktoren, durchgeführt werden.

Le A 18 612

Die Reaktion wird zweckmäßigerweise unter möglichst vollständiger Umsetzung der Percarbonsäure vorgenommen. Im allgemeinen setzt man mehr als 95 Mol.% der Percarbonsäure um. Zweckmäßig ist es, mehr als 98 Mol.% Persäure umzusetzen.

Die folgenden Beispiele erläutern die Erfindung. Sämtliche Prozentangaben stellen, soweit nichts anderes gesagt wird, Gewichtsprozente dar.

Le A 18 612

- 10 -

## Beispiel 1

19,90 g 5-(2-Propenyl)-1,3-benzodioxol (0,11 Mol) wurden in einem Doppelwandkolben mit Rührer und Rückflußkühler vorgelegt und auf 40°C erwärmt. Unter Rühren tropfte man 43,58 g (0,10 Mol) einer 20,58 %igen Lösung von Perpropionsäure in Benzol zu und ließ noch 5 Stunden bei dieser Temperatur weiterrühren. Dann zeigte die titrimetrische Analyse einen Persäureumsatz von 98 %. Die gaschromatographische Analyse ergab für das gebildete 5-(Oxiranylmethyl)-1,3-benzodioxol eine Selektivität von 61 %.

## Beispiel 2

48,82 g 5-(2-Propenyl)-1,3-benzodioxol (0,3 Mol) wurden wie in Beispiel 1 beschrieben mit 45 g (0,1 Mol) einer 20 %igen Lösung von Perpropionsäure in Dichlorpropan bei 30°C umgesetzt. Der Persäureumsatz betrug nach 6 Stunden Reaktionszeit 96 %. 5-(Oxiranylmethyl)-1,3-benzodioxol wurde mit einer Selektivität von 68 % gebildet.

## Beispiel 3

20,38 g 5-(2-Propenyl)-1,3-benzodioxol (0,125 Mol) wurden bei 40°C mit 10,55 g (0,0246 Mol)einer 20,86 %igen Lösung von Perpropionsäure in Benzol wie unter Beispiel 1 beschrieben umgesetzt. Nach 2 Stunden betrug der Persäureumsatz 97 %. Die Selektivität für die Bildung von 5-(Oxiranylmethyl)-1,3-benzodioxol betrug 78 %.

Le A 18 612

- 11 -

Das Reaktionsgemisch wurde zur Entfernung der Propionsäure mehrmals mit Wasser gewaschen und destilliert.

Ausbeute: 3,07 g ; Reinheit: 99 %

$K_{Po,5} = 96^{o}$

**Beispiel 4**

305 g 5-(2-Propenyl)-1,3-benzodioxol wurden wie in Beispiel
1 beschrieben mit 105 g einer 21,52 %igen Lösung von
Perpropionsäure in Benzol bei 32$^{o}$C umgesetzt. Nach einer
Reaktionszeit von 2,5 Stunden betrug der Persäureumsatz
98 %. 5-(Oxiranylmethyl)-1,3-benzodioxol wurde mit einer
Selektivität von 85 % gebildet. Zur Aufarbeitung wurde
das Reaktionsgemisch in einer mit einem Dünnschichtverdampfer betriebenen Destillationseinheit gegeben und in
ein Kopfprodukt, das Benzol, Propionsäure und nicht umgesetztes 5-(2-Propenyl)-1,3-benzodioxol enthielt und in
ein Sumpfprodukt, das im wesentlichen aus 5-(Oxiranylmethyl)-1,3-benzodioxol bestand, getrennt. Nach Redestillation dieses Sumpfproduktes wurde in einer Reinheit von
99,9 % 37,0 g 5-(Oxiranylmethyl)-1,3-benzodioxol erhalten.

Le A 18 612

<u>Patentansprüche</u>

1.  Verfahren zur Herstellung von 5-(Oxiranylmethyl)-
    1,3-benzodioxol aus 5-(2-Propenyl)-1,3-benzodioxol
    und Percarbonsäuren, dadurch gekennzeichnet, daß
    man 5-(2-Propenyl)-1,3-benzodioxol mit einer Lösung
    einer 1 bis 8 Kohlenstoffatome enthaltenden Percarbonsäure in einem organischen Lösungsmittel bei einem
    Molverhältnis von 5-(2-Propenyl)-1,3-benzodioxol zu
    Percarbonsäure von 1,2 bis 20 : 1 und einer Temperatur von -20 bis +80°C umsetzt.

2.  Verfahren nach Anspruch 1, dadurch gekennzeichnet, daß
    man mit einer Lösung einer 1 bis 5 Kohlenstoffatome
    enthaltenden Percarbonsäure umsetzt.

3.  Verfahren nach Anspruch 1 und 2, dadurch gekennzeichnet,
    daß man als Percarbonsäure Peressigsäure verwendet.

4.  Verfahren nach Anspruch 1 bis 2, dadurch gekennzeichnet, daß man als Percarbonsäure Perpropionsäure verwendet.

5.  Verfahren nach Anspruch 1 bis 2, dadurch gekennzeichnet,
    daß man als Percarbonsäure Perisobuttersäure verwendet.

6.  Verfahren nach Anspruch 1 bis 5, dadurch gekennzeichnet,
    daß man die Umsetzung in einem Kohlenwasserstoff als
    Lösungsmittel durchführt.

7.  Verfahren nach Anspruch 1 bis 5, dadurch gekennzeichnet,
    daß man als organisches Lösungsmittel Dichloropropan
    verwendet.

<u>Le A 18 612</u>

8. Verfahren nach Anspruch 1 bis 5. dadurch gekennzeichnet, daß man als organisches Lösungsmittel Propionsäure-äthylester verwendet.

9. Verfahren nach Anspruch 1 bis 6, dadurch gekennzeichnet, daß man als organisches Lösungsmittel Benzol verwendet.

10. Verfahren nach Anspruch 1 bis 9, dadurch gekennzeichnet, daß man die Umsetzung bei einem Molverhältnis von 5-(2-Propenyl)-1,3-benzodioxol zu Percarbonsäure wie 4 bis 8:1 durchführt.

Le A 18 612

# Europäisches Patentamt

# EUROPÄISCHER RECHERCHENBERICHT

| EINSCHLÄGIGE DOKUMENTE | | | KLASSIFIKATION DER ANMELDUNG (Int.Cl.²) |
|---|---|---|---|
| Kategorie | Kennzeichnung des Dokuments mit Angabe, soweit erforderlich, der maßgeblichen Teile | betrifft Anspruch | |
| | <u>DE - A - 2 630 107</u> (NIPPON CHEMI-PHAR) <br> * Seiten 5, 6 * <br><br> -- <br><br> Chemical Abstracts vol. 86, no. 11 <br> 14 March 1977, <br> Columbus, Ohio, USA <br> J.E. KURPEL et al "An improved method for preparation and purification of safrole oxide" <br> Seite 602, Spalte 1, <br> Abstract Nr. 72495p <br> & Anal. Lett. 1976, 9 (10), 983-6 <br><br> -- <br><br> BEILSTEINS HANDBUCH DER ORGANISCHEN CHEMIE, 4. Auflage,3. u. 4. Ergänzungswerk, 19. Band, 6. Teil 1977, <br> Springer Verlag, Berlin, Heidelberg, New York <br> * Seite 4752 oben * <br><br> -- <br><br> BEILSTEINS HANDBUCH DER ORGANISCHEN CHEMIE, 4. Auflage, 19. Band, 1934 <br> Verlag von Julius Springer, Berlin <br> * Seite 394 unten * <br> ---- | 1-6, 9 <br><br><br><br> 1 | C 07 D 407/06// <br> A 01 N 9/28 <br><br><br><br><br> **RECHERCHIERTE SACHGEBIETE (Int. Cl.²)** <br><br> C 07 D 407/06 |
| D,A | | | |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 26-03-1979 | FROELICH |

EPA form 1503.1 06.78